# EUROPÄISCHE PATENTSCHRIFT

(11) **EP 1 659 318 B1**
(45) Veröffentlichungstag und Bekanntmachung des Hinweises auf die Patenterteilung: **25.08.2010**
(21) Anmeldenummer: 05024639.6
(22) Anmeldetag: 11.11.2005
(51) Int. Cl.: F16H 61/30

(54) **Schalteinheit für ein Automatgetriebe**
Control unit for an automatic transmission
Dispositif de commande pour une transmission automatique

(30) Priorität: 23.11.2004 DE 102004056407
(43) Veröffentlichungstag der Anmeldung: 24.05.2006
(73) Patentinhaber: ZF Friedrichshafen AG, 88038 Friedrichshafen (DE)
(72) Erfinder: Müller, Bernd, 88046 Friedrichshafen (DE); Steinborn, Mario, 88046 Friedrichshafen (DE)

(56) Entgegenhaltungen:
- EP-A- 0 750 140
- EP-A- 1 067 319
- DE-A1- 4 309 901

## Beschreibung

Die Erfindung betrifft eine Schalteinheit für ein Automatgetriebe, insbesondere einer druckmittelbetätigbaren Steuerung für ein Kraftfahrzeug, gemäss dem Oberbegriff des Patentanspruches 1.

Aus der DE 102 49 341 A1 ist eine hydraulische Steuerung für ein automatisches Kraftfahrzeuggetriebe bekannt, welche einen ausfallsicheren Betrieb gewährleistet und dabei kostengünstig herstellbar ist. Dazu wird vorgeschlagen, anstelle der bekannten aber teuren mechanischen Druckminderventile ein getaktetes elektromagnetisches Schaltventil vorzusehen. Dieses Schaltventil passt das Druckniveau einer Hauptdruckleitung an das Steuerdruckniveau von Betätigungsmitteln, etwa Kolben-Zylinder-Anordnungen, an.

Aus der nicht vorveröffentlichten DE 102004006683 A1 ist eine Schalteinheit für ein automatisches Fahrzeuggetriebe bekannt, mit mehreren Ventilen, die über eine Druckzufuhrleitung und eine Druckabfuhrleitung miteinander verbunden sind, wobei Kammern von mit Stellgliedern versehenen Stellzylindem jeweils mindestens ein Schaltventil zugeordnet ist. Den als Kolben-Zylinder-Einheiten ausgebildeten Stellzylindem sind Zusatzventile derart zugeordnet sind, dass diese die Druckzufuhr bzw. die Druckabfuhrleitung getrennt schließen, öffnen oder sperren können, wobei durch diese Schalteinheit die Druckzufuhr und Druckabfuhrleitungen in ihrer Funktion getauscht werden können.

Des Weiteren ist aus der DE 4309901 A1 eine gattungsgemäße hydraulische Schalteinheit zur automatischen Ansteuerung einer Kupplung und eines Schaltgetriebes bekannt, bei der in der Druckzufuhrleitung zu Schaltventilen von Stellzylindem ein Druckspeicher vorgesehen ist.

Der Erfindung liegt die Aufgabe zugrunde, eine hydraulische oder pneumatische Steuerung für ein automatisches Kraftfahrzeuggetriebe zu schaffen, welche eine verbesserte Schaltdynamik aufweist und dabei sowohl ausfallsicher wie kostengünstig ist.

Die gestellte Aufgabe wird gemäß den Merkmalen des Hauptanspruchs gelöst durch eine Schalteinheit für ein Automatgetriebe, insbesondere einer druckmittelbetätigbaren Steuerung für ein Kraftfahrzeug, mit mehreren Ventilen, die über eine Druckzufuhrleitung und eine Druckabfuhrleitung miteinander verbunden sind, wobei Kammern von mit Stellgliedern versehenen Stellzylindem jeweils mindestens ein Schaltventil zugeordnet ist, und zwischen der Druckzuführleitung und den Schaltventilen ein Druckspeichervolumen ausgebildet und/oder angeordnet ist. Erfindungsgemäß ist in der Druckzufuhrleitung stromauf vor dem Druckspeichervolumen ein Hauptabschaltventil angeordnet, wodurch die beim Abschalten dieses Hauptabschaltventils entstehenden Druckspitzen abgepuffert auf den im Druckspeichervolumen vorhandenen Druckmittelvorrat geleitet werden.

Dieser Aufbau hat den Vorteil, dass durch die Anordnung oder Ausbildung eines Druckspeichervolumens jederzeit eine hohe Dynamik des Gesamtsystems gewährleistet ist. Bei ausreichender Dimensionierung des Druckspeichervolumens im Verhältnis zum Volumen der Kammern in den Stellzylindern wird somit bei einer auszuführenden Schaltung sehr schnell ausreichend pneumatischer oder hydraulischer Druck bereitgestellt. Dadurch sind vergleichsweise kurze Schaltzeiten realisierbar.

Vorteilhafterweise kann hierdurch auch an verschiedenen Stellen der Schalteinheit, vorzugsweise am Hauptabschaltventil, ein vergleichsweise kleines und damit kostengünstiges Schaltelement eingesetzt werden.

Von weiterem Vorteil ist es, dass eine Ausfallsicherheit erhöht ist, da bei ausreichender Dimensionierung des Druckspeichervolumens dieses für Notschaltungen bei Druckverlust im Fahrzeug durch geschlossen halten des Hauptabschaltventils genutzt werden kann.

Ein erfindungsgemäßes Druckspeichervolumen bietet darüber hinaus noch weitere Vorteile. So lässt sich das Druckspeichervolumen beispielsweise unabhängig davon, ob im Moment eine Schaltung ausgeführt wird oder nicht, mit Überdruck befüllen, wodurch die Dynamik der Schaltvorrichtung weiter erhöht und ein eine Überlast verursachender Druckabfall bei Schaltungen wirkungsvoll verhindert wird.

Auch kann der Druckvorrat nach dem Abstellen eines mit der Schalteinheit ausgestatteten Fahrzeuges aufrechterhalten werden, welches bei einem Neustart des Fahrzeugs günstig für bei einem solchen Neustart durchzuführende Einlemvorgänge einer diesbezüglichen Steuerungs- und Regelungsvorrichtung ist.

Bei ausreichender Dimensionierung des Druckspeichervolumens kann dieses bei Druckverlusten im Fahrzeug durch Schließen des Hauptabschaltventils auch vorteilhaft Notschaltungen auslösen.

Die Unteransprüche beschreiben bevorzugte Weiterbildungen oder Ausgestaltungen der Erfindung.

In weiterer Ausgestaltung einer solchen Schalteinheit kann das Druckspeichervolumen mittels einer von einem Schaltventil sperrbaren Leitung mit der Druckabfuhrleitung verbindbar sein, wodurch bei getakteter Ansteuerung dieses Schaltventils das Druckniveau im Druckspeichervolumen gezielt beeinflusst werden kann.

Weiterhin kann es vorgesehen sein, dass den Kammern der Stellgleider jeweils zwei Schaltventile zugeordnet sind, wobei eines mit dem Druckspeichervolumen verbindbar ist, und das andere mit der Druckabfuhrleitung. Diese strikte funktionelle Trennung erhöht die Schaltdynamik der Schalteinheit, da jedes Schaltventil über eine eigene, nur von diesem genutzte Leitung mit der Kammer verbindbar ist.

Wenn zusätzlich die Druckzufuhrleitung stromauf des Hauptabschaltventils mittels eines Schaltventils mit der Druckabfuhrleitung verbindbar ist, kann beispielsweise durch die Verwendung von 2/2-Wegeventilen an Stelle der den Kammern zugeordneten Schaltventilen und den in der Druckzufuhr- bzw. Druckabfuhrleitung angeordneten Schaltventilen, die Funktion der Druckzufuhr- bzw. Druckabfuhrleitung vertauscht werden. Dann gelingt durch eine Kurzschlussschaltung mindestens einer Kammer eine schnelle Befüllung des Druckspeichervolumens mittels der beiden in der Druckzufuhrleitung angeordneten 2/2-Wegeventile, und zusätzlich kann der Druckaufbau in den Zylinderkammern beschleunigt werden, indem beide Schaltventile dieser einen Zylinderkammer aktiv angesteuert werden.

Vorzugsweise mündet die das Druckspeichervolumen mit der Druckabfuhrleitung verbindende Leitung stromab eines weiteren Schaltventils in die Druckabfuhrleitung.

Die genannten Ventile sind vorzugsweise als elektromagnetisch ansteuerbare 2/2-Wegeventile ausgebildet, welches den kostengünstigen Einsatz bekannter, handelsüblicher Ventile begünstigt.

Die genannten Leitungen sowie das Druckspeichervolumen sind bevorzugt in einem gemeinsamen Gehäuse angeordnet.

Weitere Vorteile und Merkmale ergeben sich aus dem nachfolgend anhand einer schematischen Zeichnungsfigur näher erläuterten Ausführungsbeispiel.

Die Schalteinheit 1 weist Stellzylinder 2, 4 auf, die in einem gemeinsamen, nicht dargestellten Gehäuse untergebracht sein können. In den Stellzylindern 2, 4 sind Kolben 6, 8 axialverschiebbar angeordnet, welche mit als Betätigungsstangen ausgebildeten Stellgliedern 10, 12 versehen sind und die Stellzylinder 2, 4 jeweils in gegenüberliegende Kammern 16, 18 aufteilen. Mit jeder dieser Kammern 16, 18 sind über eine gesondert ausgebildete Leitungen 20 Schaltventile 22, 24, 26 und 28 verbunden.

Die Schalteinheit 1 wird über eine Druckzufuhrleitung 30 hier mit einem hydraulischen oder pneumatischen Medium versorgt, welches über eine Druckabfuhrleitung 32 abströmen kann. Die Druckabfuhrleitung 32 weist ein Schaltventil 40 auf und ist über gesonderte Leitungen 42 mit den Schaltventilen 26 und 28 verbunden.

In der Druckzufuhrleitung 30 ist ein Hauptabschaltventil 34 angeordnet, welches unmittelbar stromauf eines Druckspeichervolumens 36 angeordnet ist. An dieses Druckspeichervolumen 36 sind die Schaltventile 22 und 24 mit gesonderten Leitungen 38 angeschlossen.

Das Druckspeichervolumen 36 ist über eine von einem Schaltventil 44 beherrschte Leitung 46 stromab des Schaltventils 40 mit der Druckabfuhrleitung 32 verbunden.

Stromauf des Hauptabschaltventils 34 zweigt eine von einem weiteren Schaltventil 48 beherrschte Leitung 50 ab, welche an die Druckabfuhrleitung 32 angeschlossen ist.

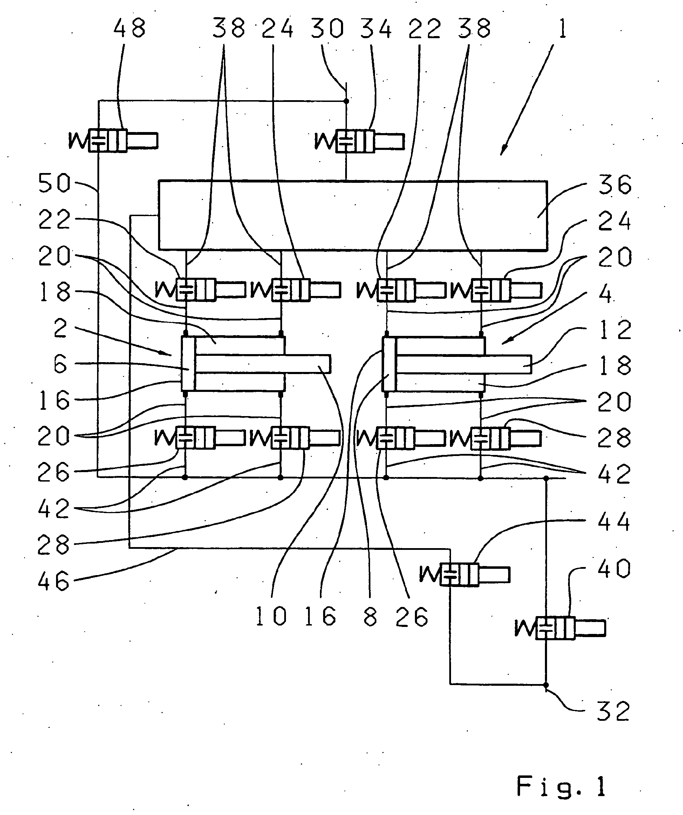

Im Betrieb der Schalteinheit wird das Stellglied 10 aus seiner Position gemäß der Figur nach rechts verschoben, wobei das Schaltventil 22 öffnet, wodurch das hydraulische oder pneumatische Medium aus dem Druckspeichervolumen 36 über die Leitung 38 und die Leitung 20 die Kammer 16 befüllt. Die Schaltventile 24 und 26 sind geschlossen, während das Schaltventil 28 zur Entleerung der Kammer 18 geöffnet ist.

In analoger Weise kann das Stellglied 10 wieder in die links liegende Position verfahren werden, wobei dann die Schaltventile 24 und 26 geöffnet sind.

Die Schalteinheit 1 bleibt bezüglich ihrer Funktion vollständig erhalten, wenn ein Einzelventilfehler auftritt. Sollte eines der Schaltventile 22 bis 28 z.B. klemmen oder durch einen elektrischen Defekt unverrückbar in seine Grundstellung verfahren, so kann dieser Funktionsausfall kompensiert werden, da sowohl in der Druckzufuhrleitung 30 wie auch der Druckabfuhrleitung 32 Schaltventile 48, 44 und 40 angeordnet sind. Durch deren Ansteuerung lässt sich die Funktion von Zufuhr bzw. Abfuhr von Druckmittel vertauschen, wodurch die Funktion eines jeden Ventils umgedreht werden kann. Da jeder Kammer 16 bzw. 18 zwei Schaltventile 22, 26 bzw. 24, 28 und getrennte Leitungen 38 bzw. 42 zugeordnet sind, kann die ausgefallene Funktion durch das jeweils andere Schaltventil vollständig ersetzt werden.

Eine zeitlich getrennte Ansteuerung von öffnungs- bzw. Schließfunktion der Schaltventile in der Druckzufuhr- bzw. der Druckabfuhrleitung 30 bzw. 32 kann die innere Dämpfung des Gesamtsystems wie auch die Dynamik der Schalteinheit 1 verändern.

### Bezupszeichen

- 1: Schalteinheit .
- 2: Stellzylinder
- 4: Stellzylinder
- 6: Kolben
- 8: Kolben
- 10: Stellglied
- 12: Stellglied
- 16: Kammer
- 18: Kammer
- 20: Leitung '
- 22: Schaltventil
- 24: Schaltventil
- 26: Schaltventil
- 28: Schaltventil
- 30: Druckzufuhrleitung
- 32: Druckabfuhrleitung
- 34: Hauptabschaltventil
- 36: Druckspeichervolumen
- 38: Leitung
- 40: Schaltventil
- 42: Leitung
- 44: Schaltventil
- 46: Leitung
- 48: Schaltventil
- 50: Leitung

## Patentansprüche

1. Schalteinheit (1) für ein Automatgetriebe, insbesondere einer druckmittelbetätigbaren Steuerung für ein Kraftfahrzeug, mit mehreren Ventilen, die über eine Druckzufuhrleitung (30) und eine Druckabfuhrleitung (32) miteinander verbunden sind, wobei Kammern (16, 18) von mit Stellgliedern (10, 12) versehenen Stellzylindern (2, 4) jeweils mindestens ein Schaltventil (22, 28) zugeordnet ist, wobei zwischen der Druckzufuhrleitung (30) und den Schaltventilen (22, 24, 26, 28) ein Druckspeichervolumen (36) ausgebildet und/oder angeordnet ist, **dadurch gekennzeichnet, dass** in der Druckzufuhrleitung (30) stromaufwärts vor dem Druckspeichervolumen (36) ein Hauptabschaltventil (34) angeordnet ist.

2. Schalteinheit (1) nach Anspruch 1, **dadurch gekennzeichnet, dass** das Druckspeichervolumen (36) mittels einer von einem Schaltventil (44) sperrbaren Leitung (46) mit der Druckabfuhrleitung (32) verbindbar ist.

3. Schalteinheit (1) nach einem der vorhergehenden Ansprüche, **dadurch gekennzeichnet, dass** den Kammern (16 bzw. 18) der Stellglieder (10, 12) jeweils zwei Schaltventile (22, 26 bzw. 24, 28) zugeordnet sind, wobei eines mit dem Druckspeichervolumen (36) und das andere mit der Druckabfuhrleitung (32) verbindbar ist.

4. Schalteinheit (1) nach einem der Ansprüche 1 bis 3, **dadurch gekennzeichnet, dass** die Druckzufuhrleitung (30) stromauf des Hauptabschaltventils (34) mittels eines Schaltventils (48) mit der Druckabfuhrleitung (32) verbindbar ist.

5. Schalteinheit (1) nach wenigstens einem der Ansprüche 2 bis 4, **dadurch gekennzeichnet, dass** die das Druckspeichervolumen (36) mit der Druckabfuhrleitung (32) verbindende Leitung (46) stromab eines Schaltventils (40) in die Druckabfuhrleitung (32) mündet.

## Claims

1. Shift unit (1) for an automatic transmission, in particular a pressure-medium-actuable controller for a motor vehicle, having a plurality of valves which are connected to one another via a pressure supply line (30) and a pressure discharge line (32), with chambers (16, 18) of actuating cylinders (2, 4) which are provided with actuators (10, 12) being assigned in each case at least one switching valve (22, 28), with a pressure accumulator volume (36) being formed and/or arranged between the pressure supply line (30) and the switching valves (22, 24, 26, 28), **characterized in that** a main shut-off valve (34) is arranged in the pressure supply line (30) upstream of the pressure accumulator volume (36).

2. Shift unit (1) according to Claim 1, **characterized in that** the pressure accumulator volume (36) can be connected to the pressure discharge line (32) by means of a line (46) which can be blocked by a switching valve (44).

3. Shift unit (1) according to one of the preceding claims, **characterized in that** the chambers (16 and 18) of the actuators (10, 12) are assigned in each case two switching valves (22, 26 and 24, 28 respectively), of which one can be connected to the pressure accumulator volume (36) and the other can be connected to the pressure discharge line (32).

4. Shift unit (1) according to one of Claims 1 to 3, **characterized in that** the pressure supply line (30) upstream of the main shut-off valve (34) can be connected to the pressure discharge line (32) by means of a switching valve (48).

5. Shift unit (1) according to at least one of Claims 2 to 4, **characterized in that** the line (46) which connects the pressure accumulator volume (36) to the pressure discharge line (32) opens into the pressure discharge line (32) downstream of a switching valve (40).

## Revendications

1. Unité de commande (1) pour une transmission automatique, en particulier une commande actionnable par un fluide sous pression pour un véhicule automobile, comprenant plusieurs soupapes, qui sont connectées les unes aux autres par le biais d'une conduite d'alimentation en pression (30) et d'une conduite d'évacuation de pression (32), à chaque fois au moins une soupape de commande (22, 28) étant associée à des chambres (16, 18) de cylindres de commande (2, 4) pourvus d'actionneurs (10, 12), entre la conduite d'alimentation en pression (30) et les soupapes de commande (22, 24, 26, 28) étant réalisé et/ou disposé un volume d'accumulation de pression (36), **caractérisée en ce que** l'on dispose dans la conduite d'alimentation en pression (30), en amont avant le volume d'accumulation de pression (36), une soupape de coupure principale (34).

2. Unité de commande (1) selon la revendication 1, **caractérisée en ce que** le volume d'accumulation de pression (36) peut être connecté à la conduite d'évacuation de pression (32) au moyen d'une conduite (46) pouvant être bloquée par une soupape de commande (44).

3. Unité de commande (1) selon l'une quelconque des revendications précédentes, **caractérisée en ce que** l'on associe à chaque fois deux soupapes de commande (22, 26, respectivement 24, 28) aux chambres (16, respectivement 18) des actionneurs (10, 12), l'une pouvant être reliée au volume d'accumulation de pression (36) et l'autre à la conduite d'évacuation de pression (32).

4. Unité de commande (1) selon l'une quelconque des revendications 1 à 3, **caractérisée en ce que** la conduite d'alimentation en pression (30) peut être connectée en amont de la soupape de coupure principale (34) au moyen d'une soupape de commande (48) à la conduite d'évacuation de pression (32).

5. Unité de commande (1) selon au moins l'une quelconque des revendications 2 à 4, **caractérisée en ce que** la conduite (46) reliant le volume d'accumulation de pression (36) à la conduite d'évacuation de pression (32) débouche en aval d'une soupape de commande (40) dans la conduite d'évacuation de pression (32).
